# EUROPÄISCHE PATENTSCHRIFT

(11) **EP 2 741 931 B1**
(45) Veröffentlichungstag und Bekanntmachung des Hinweises auf die Patenterteilung: **15.06.2016**
(21) Anmeldenummer: 12753047.5
(22) Anmeldetag: 31.07.2012
(51) Int. Cl.: B60D 1/32, B60D 1/58, B60D 1/167

(54) **ZUGDEICHSEL**
TOW BAR
BARRE D'ATTELAGE

(30) Priorität: 10.08.2011 AT 11472011
(43) Veröffentlichungstag der Anmeldung: 18.06.2014
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte KG
(86) Internationale Anmeldenummer: PCT/AT2012/000200
(87) Internationale Veröffentlichungsnummer: WO 2013/020149

(56) Entgegenhaltungen:
- DE-A1- 10 052 510
- DE-B- 1 275 878
- FR-A- 1 520 249
- US-A1- 2004 232 652

## Beschreibung

Die Erfindung betrifft eine Zugdeichsel gemäß dem Oberbegriff des Patentanspruches 1.

Es ist bekannt bei Zugdeichseln für Ladewagen mit einer bodennahen Aufnahmevorrichtung eine Zwangslenkung vorzusehen. Aufgrund der bodennahen Aufnahme ist es nicht möglich, ein durchgehendes Gestänge an der Unterseite des Ladewagens für die Zwangslenkung vorzusehen, da dies im Bereich der bodennahen Aufnahmevorrichtung nicht möglich ist. Bei bekannten Zwangslenkungen wird das Gestänge mittels Umlenkelementen nach oben und über die Aufnahmevorrichtung gelenkt, wodurch sich eine komplexe und vielteilige Zwangslenkung ergibt.

Aus der FR 1 520 249 A ist eine gattungsgemäße Zugdeichsel mit einem Dämpfungssystem umfassend einen Dämpfungszylinder bekannt.

Aus der DE 100 52 510 A1 ist eine Dämpfungsvorrichtung für einen Anhänger bekannt.

Aus der DE 12 75 878 B und der US 2004/232652 A1 sind Stabilisierungsvorrichtungen für Anhänger mit Schwingungsdämpfern bekannt. Aufgabe der Erfindung ist es daher eine Zugdeichsel der eingangs genannten Art anzugeben, mit welcher die genannten Nachteile vermieden werden können und bei der einfach eine Zwangslenkung für Ladewagen mit einer bodennahen Aufnahmevorrichtung bereitgestellt werden kann, wobei insbesondere der Bereich der bodennahen Aufnahmevorrichtung von der Zwangslenkung nicht beeinträchtigt wird.

Erfindungsgemäß wird dies durch die Merkmale des Patentanspruches 1 erreicht. Vorteilhaft dabei ist, dass mittels des Geberzylinders bereits im Bereich der Zugdeichsel die für die Lenkung erfoderliche Kraft aufgebracht werden kann und diese mittels eines Hydrauliksystems einfach zu der Lenkeinheit der Räder des Ladewagens gebracht werden kann. Dabei kann das Hydrauliksystem in Leitungen einfach um die bodennahe Aufnahmevorrichtung herum verlegt werden, wodurch eine Beeinträchtigung der bodennahen Aufnahmevorrichtung durch die Zwangslenkungseinrichtung vermieden wird.

Die Erfindung betrifft weiters einen Ladewagen mit einer Zugdeichsel und einer zugdeichselseitig angeordneten bodennahen Aufnahmevorrichtung, wobei die Zugdeichsel nach einem der Patentansprüche 1 bis 6 ausgebildet ist. Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine Schrägansicht auf eine Zugdeichsel;
Fig. 2 eine Seitenansicht auf die Zugdeichsel gemäß Fig. 1;
Fig. 3 eine Ansicht von unten auf die Zugdeichsel gemäß Fig. 1; und
Fig. 4 eine Schrägansicht auf die Zugdeichsel gemäß Fig. 1 im eingelenkten Zustand.

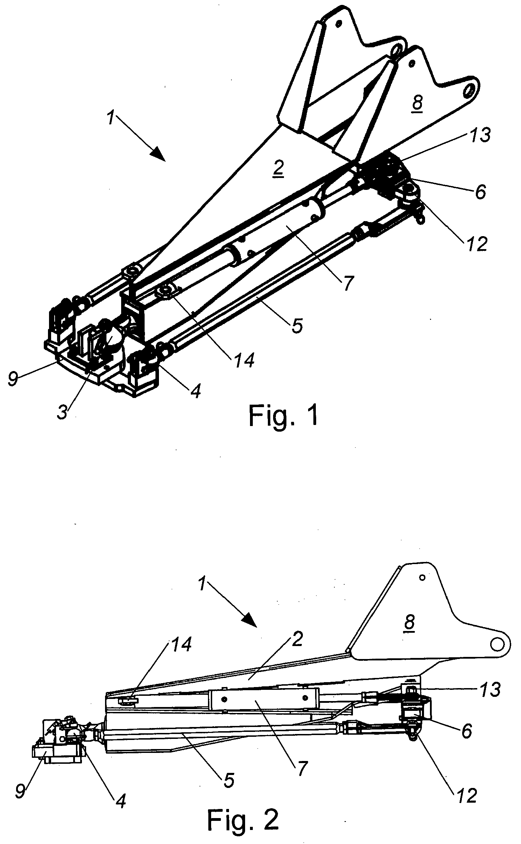

Die Fig. 1 bis 4 zeigen eine bevorzugte Ausführungsform einer Zugdeichsel 1 für einen eine zugdeichselseitig angeordnete bodennahe Aufnahmevorrichtung aufweisenden Ladewagen, mit einem Tragelement 2 zur Verbindung mit dem Ladewagen, wobei das Tragelement 2 ein Haupt-Kuppelelement 3 zum Kuppeln mit einem Zugfahrzeug aufweist, und mit wenigstens einem Zusatz-Kuppelelment 4 einer Zwangslenkungseinrichtung zum Kuppeln mit dem Zugfahrzeug.

An einem ersten Anlenkpunkt 11 ist wenigstens ein Querelement 6 gelenkig an dem Tragelement 2 gelagert. Ein mit dem wenigstens einen Zusatz-Kuppelelement 4 verbundenes Verbindungselement 5 ist an einem zweiten Anlenkpunkt 12 gelenkig mit dem wenigstens einen Querelement 6 verbunden und ein Geberzylinder 7 des Zwangslenkungssystems ist einerends an einem dritten Anlenkpunkt 13 mit dem wenigstens einen Querelement 6 und anderends an einem vierten Anlenkpunkt 14 mit dem Tragelement 2 in einem Bereich zwischen dem ersten Anlenkpunkt 11 und dem Haupt-Kuppelelement 3 angelenkt.

Ladewagen mit einer zugdeichselseitig angeordneten bodennahen Aufnahmevorrichtung sind in der Landwirtschaft sein langem bekannt. Beispielsweise kann die bodennahe Aufnahmevorrichtung zur Aufnahme von Gras ausgebildet sein. Andere Ausführungsformen können für die Ernte von Kartoffeln, Karotten, Rüben, Kürbisse, Melonen oder dergleichen vorgesehen sein.

Die Zugdeichsel 1 stellt das Verbindungsglied zwischen dem Ladewagen und dem Zugfahrzeug dar. Das Zugfahrzeug kann beispielsweise ein Traktor sein und weist eine Kupplungseinrichtung 9 auf, welche in den Fig. 1 bis 4 angedeutet ist.

Die Zugdeichsel 1 weist ein Tragelement 2 auf, welches für die Aufnahme der zwischen dem Zugfahrzeug und dem Ladewagen entstehenden Kräfte ausgebildet ist. Das Tragelement 2 weist ein Haupt-Kuppelelement 3 auf, welches mit dem Zugfahrzeug gekuppelt werden kann. Dabei weist die Kupplungseinrichtung 9 eine gegengleiche Kupplung auf. Das Haupt-Kuppelelement 3 kann beispielsweise eine Kugelpfanne oder einen Ring umfassen.

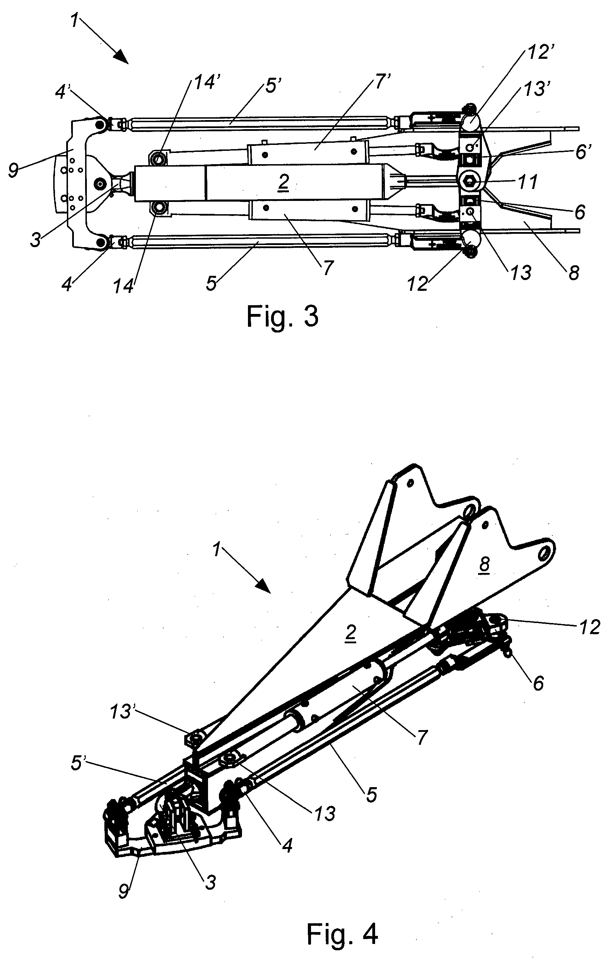

Mit dem Zusatz-Kuppelelement 4 der Zwangslenkungseinrichtung kann der Ladewagen an einer weiteren Stelle mit dem Zugfahrzeug verbunden werden, wodurch der Winkel zwischen dem Ladewagen und dem Zugfahrzeug auf einfache Weise ermittelt werden kann. In Fig. 4 ist ein eingelenkter Zustand dargestellt, bei dem das Zugfahrzeug und der Ladewagen nicht in Geradeausfahrstellung stehen.

Das Zusatz-Kuppelelement 4 kann analog dem Haupt-Kuppelelement 3 ausgebildet sein. Da die zu übertragenden Kräfte üblicherweise erheblich geringer sind, kann das Zusatz-Kuppelelement 4 im Vergleich zu dem Haupt-Kuppelelement 3 geringer dimensioniert sein.

Mit dem Zusatz-Kuppelelement 4 ist das Verbindungselement 5 verbunden, welches an dem zweiten Anlenkpunkt 12 gelenkig mit dem wenigstens einen Querelement 6 verbunden ist. Das wenigstens eine Querelement 6 ist an dem ersten Anlenkpunkt 11 gelenkig an dem Tragelement 2 gelagert. Eine Änderung des Winkels zwischen dem Ladewagen und dem Zugfahrzeug bewirkt eine Verdrehung des wenigstens einen Querelementes 6 um den ersten Anlenkpunkt 11.

Durch die Verdrehung des wenigstens einen Querelementes 6 um den ersten Anlenkpunkt 11 und somit auch gegenüber dem Tragelement 2 wird die Länge des Geberzylinders 7 verändert. Diese Veränderung bewirkt eine Veränderung im Hydrauliksystem, welche mittels Leitungen einfach zu den gelenkten Rädern des Ladewagens geleitet werden können. Dabei können die Leitungen einfach um die bodennahe Aufnahmevorrichtung geführt werden. In dem Hydrauliksystem kann von dem Geberzylinder 7 die für die Lenkung erforderliche Kraft bereitgestellt werden.

Vorzugsweise ist das Zusatz-Kuppelelement 4 mittels des Verbindungselementes 5 in einem festen Abstand von dem zweiten Anlenkpunkt 12 angeordnet.

Weiters ist vorzugsweise der zweite Anlenkpunkt 12 mittels des Querelementes 6 in einem festen Abstand von dem ersten Anlenkpunkt 11 angeordnet.

Dabei können die Kupplungseinrichtung 9, das Tragelement 2, das Querelement 6 und das Verbindungselement 5 im Wesentlichen ein Parallelogramm ausbilden, bei dem die Abstände zweier Anlenkpunkte 11, 12 gegenüberliegender Seiten jeweils gleich lang ausgebildet sind. Diese Seitenlängen sind im Betrieb annähernd konstant, wobei eine einfache und genaue Bewegung der einzelnen Teile bei einer Veränderung des Winkels zwischen dem Zugfahrzeug und dem Ladewagen erreicht werden kann.

Der Anlenkpunkt 13 des Geberzylinders 7 an dem Querelement 6 kann veränderbar ausgebildet sein. Dabei kann beispielsweise vorgesehen sein, dass das Querelement 6 mehrere Bohrungen für die Befestigung des Geberzylinders aufweist. Bevorzugt weist das Querelement 6 ein Langloch auf, in dem der dritte Anlenkpunkt 13 festgelegt werden kann.

Bei der Ausführungsform in den Fig. 1 bis 4 weist die Zugdeichsel 1 zwei Zusatz-Kuppelelemente 4 auf. Dies ist insbesondere vorteilhaft, wenn die Räder zweier Achsen des Ladewagens gelenkt werden, da dann eine unabhängige Lenkung für jede Achse bereitgestellt werden kann.

Bei anderen Ausführungsformen kann auch lediglich ein Zusatz-Kuppelelement 4 vorgesehen sein.

Bei wieder anderen Ausführungsformen können auch mehr als zwei Zusatz-Kuppelelemente 4 vorgesehen sein, beispielsweise drei oder vier.

Sind mehrere Zusatz-Kuppelelemente 4 vorhanden, so können diese an demselben Querelement 6 verbunden sein.

Es hat sich als günstig erwiesen, wenn bei mehreren Zusatz-Kuppelelementen 4 auch mehrere Querelemente 6 vorhanden sind und jedem Zusatz-Kuppelelement 4 genau eines der Querelemente 6 zugeordnet ist.

Dabei können die mehreren Querelemente 6 an demselben ersten Anlenkpunkt 11 mit dem Tragelement 2 verbunden sein.

Bei einem Ladewagen mit einer Zugdeichsel 1 und einer zugdeichselseitig angeordneten bodennahen Aufnahmevorrichtung können durch die oben beschriebene Ausbildung der Zugdeichsel 1 einfach die erfindungsgemäßen Vorteile bereitgestellt werden.

Die Zugdeichsel 1 kann einen Befestigungsbereich 8 aufweisen, mit dem eine Befestigung mit dem Ladewagen einfach und zuverlässig erfolgen kann.

## Patentansprüche

1. Zugdeichsel (1) für einen eine zugdeichselseitig angeordnete bodennahe Aufnahmevorrichtung aufweisenden Ladewagen, mit einem Tragelement (2) zur Verbindung mit dem Ladewagen, wobei das Tragelement (2) ein Haupt-Kuppelelement (3) zum Kuppeln mit einem Zugfahrzeug aufweist, und mit wenigstens einem Zusatz-Kuppelelment (4) einer Zwangslenkungseinrichtung zum Kuppeln mit dem Zugfahrzeug, wobei wenigstens ein Querelement (6) an einem ersten Anlenkpunkt (11) gelenkig an dem Tragelement (2) gelagert ist, ein mit dem wenigstens einen Zusatz-Kuppelelement (4) verbundenes Verbindungselement (5) an einem zweiten Anlenkpunkt (12) gelenkig mit dem wenigstens einen Querelement (6) verbunden ist und ein Geberzylinder (7) des Zwangslenkungssystems einerends an einem dritten Anlenkpunkt (13) mit dem wenigstens einen Querelement (6) und anderends an einem vierten Anlenkpunkt (14) mit dem Tragelement (2) in einem Bereich zwischen dem ersten Anlenkpunkt (11) und dem Haupt-Kuppelelement (3) angelenkt ist, **dadurch gekennzeichnet, dass** zumindest zwei Zusatz-Kuppelelemente (4) vorgesehen sind.

2. Zugdeichsel nach Patentanspruch 1, **dadurch gekennzeichnet, dass** das Zusatz-Kuppelelement (4) mittels des Verbindungselementes (5) in einem festen Abstand von dem zweiten Anlenkpunkt (12) angeordnet ist.

3. Zugdeichsel nach Patentanspruch 1 oder 2, **dadurch gekennzeichnet, dass** der zweite Anlenkpunkt (12) mittels des Querelementes (6) in einem festen Abstand von dem ersten Anlenkpunkt (11) angeordnet ist.

4. Zugdeichsel nach einem der Patentansprüche 1 bis 3, **dadurch gekennzeichnet, dass** jedem der zumindest zwei Zusatz-Kuppelelemente (4) jeweils genau ein Querelement (6) zugeordnet ist.

5. Zugdeichsel nach Patentanspruch 4, **dadurch gekennzeichnet, dass** sämtliche Querelemente (6) an demselbem ersten Anlenkpunkt (11) mit dem Tragelement (2) verbunden sind.

6. Ladewagen mit einer Zugdeichsel (1) und einer zugdeichselseitig angeordneten bodennahen Aufnahmevorrichtung, **dadurch gekennzeichnet, dass** die Zugdeichsel (1) nach einem der Patentansprüche 1 bis 5 ausgebildet ist.

## Claims

1. A tow bar (1) for a trailer having a near-to-ground receiving apparatus arranged on the tow bar side, comprising a support element (2) for connection to the trailer, wherein the support element (2) has a main coupling element (3) for coupling to a tractor vehicle, and at least one additional coupling element (4) of a forced steering device for coupling to the tractor vehicle, wherein at least one transverse element (6) is mounted on the support element (2) in an articulated manner at a first attachment point (11), a connecting element (5) connected to the at least one additional coupling element (4) is connected in an articulated manner at a second attachment point (12) to the at least one transverse element (6), and a master cylinder (7) of the forced steering system is hinged at one end at a third attachment point (13) to the at least one cross member (6) and at the other end at a fourth attachment point (14) to the support element (2) in a region between the first attachment point (11) and the main coupling element (3), **characterized in that** at least two additional coupling elements (4) are provided.

2. A tow bar according to claim 1, **characterized in that** the additional coupling element (4) is arranged by means of the connecting element (5) at a fixed distance from the second attachment point (12).

3. A tow bar according to claim 1 or 2, **characterized in that** the second attachment point (12) is arranged by means of the transverse element (6) at a fixed distance from the first attachment point (11).

4. A tow bar according to one of the claims 1 to 3, **characterized in that** precisely one transverse element (6) each is assigned to each of the at least two additional coupling elements (4).

5. A tow bar according to claim 4, **characterized in that** all transverse elements (6) are connected at the same first attachment point (11) to the support element (2).

6. A trailer with a tow bar (1) and a near-to-ground receiving apparatus arranged on the tow bar side, **characterized in that** the tow bar (1) is formed according to one of the claims 1 to 5.

## Revendications

1. Timon de traction (1) pour une remorque de transport comportant un dispositif de réception proche du sol disposé du côté du timon, avec un élément portant (2) destiné à la liaison avec la remorque de transport, lequel élément portant (2) présente un élément d'attelage principal (3) pour l'attelage à un véhicule tracteur, et avec au moins un élément d'attelage supplémentaire (4) d'un dispositif de direction forcée pour l'attelage au véhicule tracteur, dans lequel au moins un élément transversal (6) est supporté sur l'élément portant (2) de façon articulée en un premier point d'articulation (11), un élément de liaison (5) relié à l'au moins un élément d'attelage supplémentaire (4) est relié à l'au moins un élément transversal (6) de façon articulée en un deuxième point d'articulation (12) et un maître-cylindre (7) du dispositif de direction forcée est articulé à un extrémité à l'au moins un élément transversal (6) en un troisième point d'articulation (13) et à l'autre extrémité à l'élément portant (2) en un quatrième point d'articulation (14) dans une zone comprise entre le premier point d'articulation (11) et l'élément d'attelage principal (3), **caractérisé en ce qu'**au moins deux éléments d'accouplement supplémentaires (4) sont prévus.

2. Timon de traction selon la revendication 1, **caractérisé en ce que** l'élément d'attelage supplémentaire (4) est disposé au moyen de l'élément de liaison (5) à une distance fixe du deuxième point d'articulation (12).

3. Timon de traction selon la revendication 1 ou 2, **caractérisé en ce que** le deuxième point d'articulation (12) est disposé au moyen de l'élément transversal (6) à une distance fixe du premier point d'articulation (11).

4. Timon de traction selon l'une des revendications 1 à 3, **caractérisé en ce que** chacun des au moins deux éléments d'attelage supplémentaires (4) est associé à précisément un élément transversal (6).

5. Timon de traction selon la revendication 4, **caractérisé en ce que** tous les éléments transversaux (6) sont reliés à l'élément portant (2) sur le même point d'articulation (11).

6. Remorque de transport avec un timon de traction (1) et un dispositif de réception proche du sol disposé du côté du timon, **caractérisée en ce que** le timon de traction (1) est conformé selon l'une des revendications 1 à 5.
